# FASCICULE DE BREVET EUROPEEN

(11) **EP 2 896 447 B1**
(45) Date de publication et mention de la délivrance du brevet: **08.05.2019**
(21) Numéro de dépôt: 15305019.0
(22) Date de dépôt: 12.01.2015
(51) Int. Cl.: B01D 53/18, B01D 3/00

(54) **PLATEAU DISTRIBUTEUR POUR COLONNE D'ÉCHANGE ENTRE UN GAZ ET UN LIQUIDE AVEC DÉFLECTEUR DE LIQUIDE**
VERTEILERBODEN FÜR AUSTAUSCHSÄULE ZWISCHEN EINEM GAS UND EINER FLÜSSIGKEIT MIT FLÜSSIGKEITSABWEISER
DISTRIBUTION TABLE FOR EXCHANGE COLUMN BETWEEN A GAS AND A LIQUID WITH LIQUID DIVERTER

(30) Priorité: 21.01.2014 FR 1450482
(43) Date de publication de la demande: 22.07.2015
(73) Titulaire: IFP Energies nouvelles, 92500 Rueil-Malmaison (FR)
(72) Inventeur: Roesler, John, 38200 Vienne (FR); Haroun, Yacine, Davis, CA 95616 (FR)
(74) Mandataire: IFP Energies nouvelles

(56) Documents cités:
- WO-A1-2006/076923
- WO-A1-2013/017804
- WO-A1-2015/090476
- WO-A2-2014/199035
- US-A- 2 061 830
- US-A1- 2010 019 061

## Description

La présente invention concerne le domaine des colonnes de contact gaz/liquide, et plus particulièrement pour les unités de traitement de gaz, de captage du CO₂, ou encore de distillation.

Les unités de traitement de gaz et/ou de captage du CO₂ par lavage aux amines et/ou de distillation comprennent des colonnes d'échange de matière et/ou de chaleur entre un gaz et un liquide, il peut s'agir par exemple de colonne d'absorption et de régénération de fluides, liquide ou gazeux. Ces colonnes fonctionnent en écoulement gaz/liquide à contre-courant ou à co-courant.

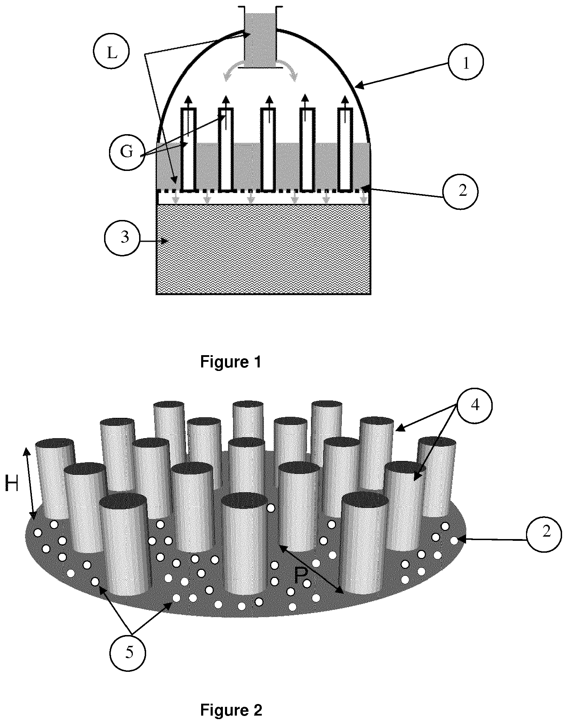

Les colonnes utilisées dans ces unités de traitement de gaz et/ou de captage de CO₂ et/ou de distillation et/ou de déshydratation fonctionnent généralement sur le principe d'un échange de matière et/ou de chaleur entre le gaz et le fluide qui circulent dans les colonnes. La figure 1 représente un cas particulier d'une tête de colonne de traitement de gaz (1) équipée d'un plateau distributeur. Classiquement, cette colonne de traitement de gaz (1) comporte plusieurs sections (3) remplies par un contacteur, notamment un garnissage, un plateau distributeur (2) est disposé au-dessus de chaque section (3). Le contacteur gaz/liquide (3) met en contact le gaz (G) et le liquide (L) afin de permettre les échanges.

Par exemple, des distributeurs standards (2) utilisés dans les colonnes d'absorption/régénération ou encore de distillation sont généralement constitués d'un plateau collecteur/distributeur équipé de cheminées (4) ou caissons pour le passage du gaz (cf. figure 2). La distribution du liquide se fait par le passage du liquide dans des orifices (5) positionnés sur le bas du plateau (2) et la distribution du gaz se fait par les caissons (4). Chaque caisson (4) permet le passage du gaz, selon le mode de fonctionnement contre-courant ou co-courant, de la partie basse de la colonne vers la partie haute de la colonne (1) ou bien de la partie haute vers la partie basse. Les caissons (4) sont en saillie d'un côté du plateau (2) et sont perpendiculaires à celui-ci. Chaque caisson (4) est formé de plusieurs parois, par exemple parallélépipédiques ou cylindriques qui délimitent un volume interne qui est ouvert de part et d'autre du plateau (2). Pour éviter que le liquide ne passe dans les caissons (4), l'ouverture d'échappement ou d'arrivée du gaz au-dessus du plateau (selon le mode de fonctionnement à contre-courant ou à co-courant), est préférentiellement recouverte par un chapeau (appelé également biseau). L'objectif du plateau distributeur est de distribuer le liquide (L) de manière homogène sur le contacteur gaz/liquide (3).

Afin d'optimiser les échanges entre le gaz et le liquide, de nombreux plateaux distributeurs ont été conçus. Ces plateaux distributeurs/collecteurs s'organisent principalement en deux grandes familles :
- systèmes distributeur/collecteur avec des cheminées, tels que décrits dans les demandes de brevet GB1169878A, US4808350A, US4472325A, US4427605A, US4839108A, FR2203659. Pour ce type de systèmes avec cheminées, la distribution du liquide se fait via des orifices situés sur le plateau ou via des cheminées de passage de liquide équipées d'orifices ou de fentes (cf. exemple de la figure 2), la distribution du gaz se fait par des cheminées de passage du gaz ou des caissons. La distribution du liquide se fait par des orifices réalisés sur le plateau ou au moyen de cheminées pour le passage du liquide. Il est bien connu que la distribution du liquide par des orifices installés sur le plateau ne permet pas une bonne flexibilité au débit liquide. La distribution du liquide au moyen de cheminée offre une bonne flexibilité mais ne permet pas d'obtenir une répartition homogène du liquide sur le contacteur, sans un nombre élevé d'orifices ou de cheminées, ce qui rend le plateau complexe et lourd (nombre important de cheminées de passage du liquide).
- systèmes avec des caissons distributeurs alimentés par une alimentation dédiée (système de collecte en amont ou alimentation intermédiaire) tels que décrits dans les demandes de brevets US4909967, US4816191, US4981265, DE2752391, WO8802647, FR2569129 ou distributeur/collecteur avec des caissons pour le passage du gaz tels que décrits dans les demandes de brevet US4689183, US5132055, US4432913. Ces types de distributeurs ont le plus souvent des systèmes de distribution du liquide situés sur les caissons de passage du gaz.

De plus, il a été développé des plateaux distributeurs munis de déflecteurs pour la distribution du liquide sur le contacteur (cf. par exemple les demandes de brevet US2010019061, US20090134063, US5403561, CN100364652). Cependant, ces derniers sont pour la plupart conçus pour des colonnes fonctionnant à co-courant pour lesquelles l'objectif du déflecteur est de disperser le liquide sous forme de gouttelettes. Or, dans les distributeurs liquides des procédés à contre-courant il faut éviter la formation de gouttelettes qui pourraient être entrainées par le gaz au détriment de l'efficacité du procédé. Les écoulements de liquide en sortie du déflecteur pour les procédés à contre-courant doivent être des jets denses. De plus, l'objectif de ces déflecteurs est de fournir une distribution homogène du fluide dans toutes les directions.

L'écoulement du liquide dans les garnissages est différent en fonction de la technologie du garnissage. Sur un garnissage vrac la dispersion (diffusion) du liquide dans le lit de garnissage est isotrope. Par contre, sur un garnissage structuré les plaques du garnissage restreignent fortement l'orientation de la dispersion du liquide à des directions parallèles aux plaques (une certaine dispersion secondaire perpendiculaire aux plaques peut toutefois se produire par l'existence de petites ouvertures sur les plaques, généralement des orifices). La dispersion dans les directions perpendiculaires aux plaques se fait ultérieurement par le passage à la tranche de garnissage suivante dont les plaques sont positionnées généralement à 90°, mais elle n'est pas assurée pou r la première tranche (tranche supérieure). Pour un plateau distributeur classique, la distribution du liquide n'étant pas orientée, on peut estimer à 70% la surface non exploitée sur la première tranche de garnissage structuré.

Pour pallier ces problèmes, la présente invention concerne un plateau distributeur pour colonne d'échange de chaleur et/ou de matière entre un gaz et un liquide. Le plateau comporte des moyens de passage du gaz, des cheminées du passage du liquide, et des moyens de répartition du liquide selon une orientation préférentielle. Ainsi, l'invention permet d'offrir une bonne qualité de distribution du liquide et d'améliorer l'efficacité des échanges entre le gaz et le liquide sur au moins une première tranche de garnissage structuré par des moyens de répartitions orientés.

### Le dispositif selon l'invention

L'invention concerne un plateau distributeur pour colonne d'échange de chaleur et/ou de matière entre un gaz et un liquide comportant des moyens pour le passage dudit gaz à travers ledit plateau et au moins une cheminée pour le passage dudit liquide à travers ledit plateau. Ledit plateau comporte en outre des moyens de répartition du liquide en saillie sur la partie inférieure dudit plateau pour répartir selon une orientation préférentielle ledit liquide en provenance de ladite cheminée.

Selon l'invention, lesdits moyens de répartition du liquide répartissent ledit liquide sous forme d'au moins un jet.

Ledit plateau étant disposé au-dessus d'un garnissage structuré, lesdits moyens de répartition du liquide sont orientés sensiblement perpendiculairement à la direction, dans un plan transversal, des plaques de la couche supérieure dudit garnissage structuré.

De manière avantageuse, lesdits moyens de répartition du liquide sont fixés à ladite cheminée par vissage, soudage, collage ou par insertion dans ladite cheminée.

De préférence, lesdits moyens de passage du gaz sont formés par des caissons en saillie sur la partie supérieure dudit plateau.

Selon l'invention, lesdits moyens de répartition du liquide comprennent une conduite équipée d'au moins un moyen de passage du liquide, ladite conduite étant sensiblement parallèle audit plateau.

Selon une variante, ledit moyen de passage du liquide est un orifice (7, 11) ou un tube placé sur ladite conduite (5).

Avantageusement, ladite conduite comporte une pluralité d'orifices ou de tubes alignés selon la direction axiale de ladite conduite.

De manière avantageuse, ledit orifice a la forme d'une fente.

Ladite conduite comporte une plaque de dispersion du jet en provenance de ladite cheminée vers ledit moyen de passage du liquide.

Selon un aspect de l'invention, ledit moyen de passage du liquide est situé en partie haute desdits moyens de répartition du liquide, lesdits moyens de répartitions du liquide étant pourvus d'un déflecteur pour diriger le liquide en sortie desdits moyens de passage du liquide vers le bas.

Selon un mode de réalisation, lesdits moyens de répartition du liquide sont rattachés à plusieurs cheminées.

En outre, l'invention concerne une colonne d'échange de chaleur et/ou de matière entre un gaz et un liquide, dans laquelle les deux fluides sont mis en contact au moyen d'un garnissage structuré. Ladite colonne comporte au moins un plateau distributeur selon l'invention pour distribuer lesdits fluides sur ledit garnissage structuré.

De préférence, lesdits moyens de répartition du liquide sont orientés sensiblement perpendiculairement à la direction, dans un plan transversal, des plaques de la couche supérieure dudit garnissage structuré.

De plus, l'invention concerne une utilisation d'une colonne telle que décrite pour un procédé de traitement de gaz, de captage de CO₂, de distillation ou de transformation d'air.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1, déjà décrite, illustre le cas particulier d'une tête de colonne de traitement de gaz ou de capture de CO₂ équipée d'un plateau distributeur.
La figure 2, déjà décrite, illustre un plateau distributeur selon l'art antérieur.
La figure 3 illustre un exemple de garnissage structuré.
La figure 4 illustre un exemple de plateau distributeur.
La figure 5 illustre une cheminée d'un plateau distributeur.
La figure 6 illustre schématiquement les moyens de répartition du liquide d'un plateau distributeur.
La figure 7 illustre un mode de réalisation des moyens de répartition de liquide.
La figure 8 illustre un premier mode de réalisation des moyens de répartition de liquide selon l'invention.
La figure 9 illustre un deuxième mode de réalisation des moyens de répartition de liquide selon l'invention.
La figure 10 illustre un troisième mode de réalisation des moyens de répartition de liquide selon l'invention.
La figure 11 illustre un quatrième mode de réalisation des moyens de répartition de liquide selon l'invention.
Les figures 12a et 12b illustrent un cinquième mode de réalisation des moyens de répartition de liquide selon l'invention.

### Description détaillée de modes de réalisation de l'invention

L'invention concerne un plateau distributeur pour colonne d'échange de chaleur et/ou de matière entre un gaz et un liquide, comprenant classiquement au moins un moyen pour le passage de gaz à travers le plateau, tel qu'un caisson, au moins une cheminée pour le passage du liquide à travers le plateau et au moins des moyens de répartition du liquide. Le plateau distributeur permet de former une garde de liquide sur sa surface supérieure. Les caissons et les cheminées sont en saillie sur la partie supérieure du plateau (orientés vers le haut de la colonne), alors que les moyens de répartition du liquide sont en saillie sur la partie inférieure du plateau (orienté vers le bas de la colonne). Les moyens de répartition du liquide distribuent le liquide en provenance des cheminées en dessous du plateau selon une orientation préférentielle. L'orientation préférentielle est déterminée en fonction de l'application du plateau (distillation, traitement de gaz...) et/ou du type et de l'orientation du contacteur (par exemple garnissage structuré) utilisé dans la colonne. Le plateau distributeur selon l'invention est adapté pour des écoulements à contre-courant dans la colonne d'échange de chaleur et/ou de matière ; le gaz montant à travers les caissons et le liquide descendant à travers les cheminées et les moyens de répartition. Toutefois, il convient également pour les écoulements à co-courant.

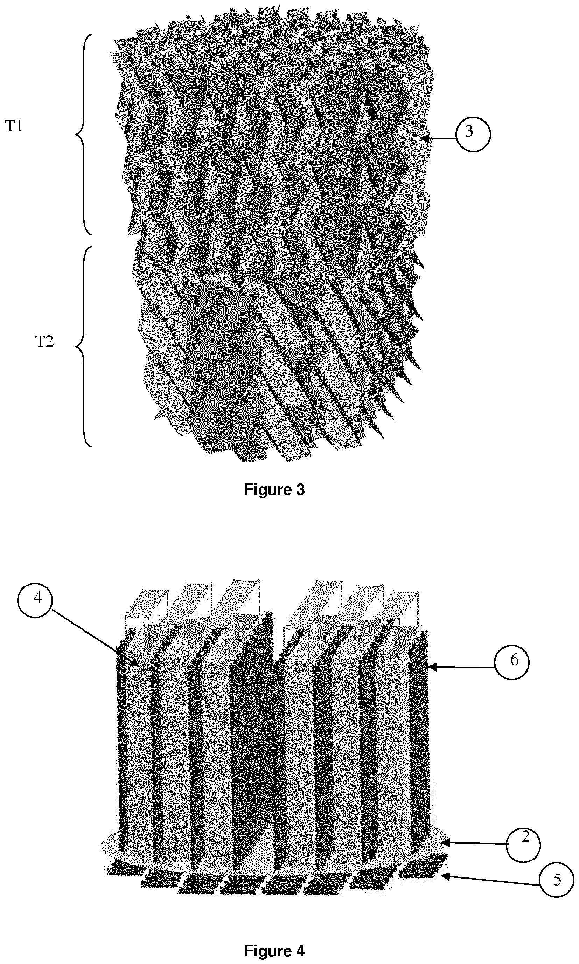

La figure 4 illustre un plateau distributeur selon un mode de réalisation. Pour cet exemple de réalisation, le plateau distributeur (2) est équipé de caissons (4) pour le passage du gaz à travers le plateau, de cheminées (6) pour le passage du liquide à travers le plateau (2), et des moyens de répartition du liquide (5). Les moyens de répartitions du liquide (5) sont reliés aux cheminées (6) et sont tous orientés dans la même direction pour distribuer le liquide selon une direction préférentielle. Le liquide est distribué par les orifices situés sur les cheminées liquides vers les moyens de répartition du liquide (5), également appelés déflecteurs. Selon l'exemple de réalisation illustré, il y a un moyen de répartition du liquide (5) pour chaque cheminée (6).

Le caisson pour le passage du gaz permet, pour une colonne fonctionnant à contre-courant, le passage du gaz du dessous vers le dessus du plateau. Avantageusement, le caisson pour le passage du gaz a une forme sensiblement parallélépipédique, de manière à offrir une large ouverture au passage du gaz pour limiter les pertes de charge. De plus, lorsque le plateau distributeur comporte plusieurs caissons pour le passage du gaz, ceux-ci peuvent être disposés parallèlement les uns par rapport aux autres. Les caissons pour le passage du gaz sont de préférence recouverts d'un chapeau (appelés également biseau) pour empêcher que le liquide pénètre dans ces derniers.

Les moyens pour le passage du liquide permettent le passage du liquide du dessus du plateau vers le dessous. Selon l'invention, les moyens pour le passage du liquide à travers le plateau sont composés d'un ensemble de cheminées. Ces cheminées, sensiblement de forme tubulaires, sont disposées entre les caissons pour le passage du gaz. Le nombre de cheminées est avantageusement supérieur au nombre de caissons pour le passage du gaz. Le pas des cheminées pour le passage du liquide peut avoir un pas triangulaire ou carré.

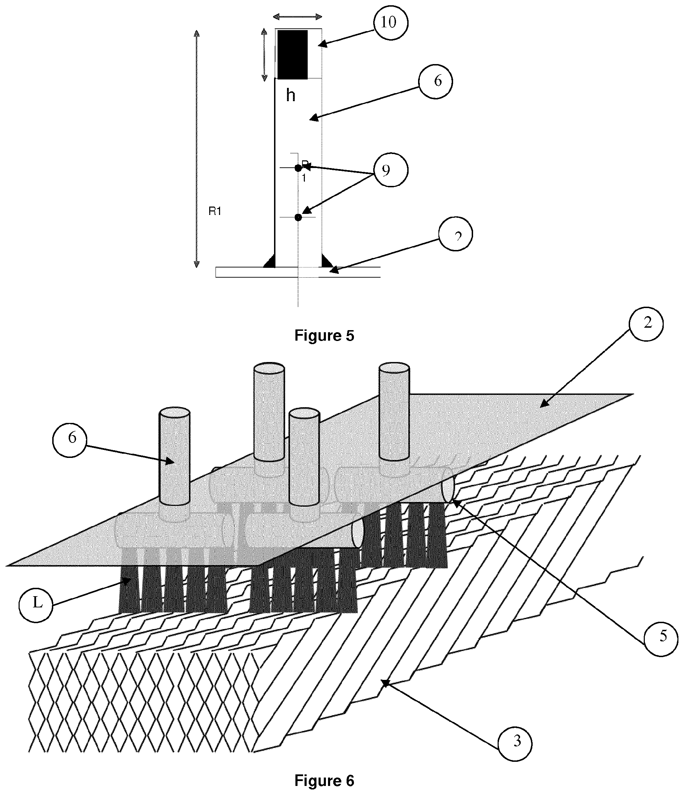

La figure 5 est un exemple de cheminée (6) pouvant être utilisée pour le plateau distributeur selon l'invention. La cheminée (6) est d'une hauteur H inférieure à la hauteur des caissons pour le passage du gaz (par exemple une cheminée (6) peut avoir une hauteur de 600 mm et un caisson une hauteur de 700 mm). Pour éviter que du liquide pénètre dans les caissons pour le passage du gaz lorsque la hauteur de garde de liquide est importante, la cheminée possède une ouverture (10). Cette ouverture permet également d'équilibrer la pression au sein de la cheminée. De plus, la cheminée (6) possède un chapeau (ou biseau) pour éviter l'entrée du liquide directement dans la cheminée (6). La cheminée (6) comporte au moins un, de préférence et tel que représenté deux, orifice(s) (9) radiaux pour l'entrée du liquide dans la cheminée, le liquide étant acheminé par gravité en dessous du plateau. De préférence, lorsque la cheminée (6) comporte au moins deux orifices (9) radiaux, ceux-ci sont situés à des hauteurs différentes : h_{R1} et h_{R2}. Ainsi, lorsque le débit de liquide est faible, la hauteur de garde du liquide sur le plateau (hauteur du liquide par rapport au niveau du plateau) est faible, seul le premier orifice radial permet au liquide de traverser le plateau. Lorsque le débit de liquide est plus élevé, la hauteur de garde du liquide augmente et les premier et deuxième orifices radiaux permettent au liquide de traverser le plateau. Grâce à cette caractéristique, le plateau distributeur est adapté à différents débits, il est donc flexible. La cheminée peut également comporter plusieurs niveaux d'orifices (supérieur à 2)

Les moyens de répartition du liquide permettent de distribuer le liquide contenu dans les cheminées sur un contacteur notamment un garnissage (figure 1). Le garnissage (3) peut être un garnissage structuré, tel que représenté en figure 3. Sur cette figure, et sur les suivantes, le garnissage est représenté d'une manière schématique et non limitative. Un garnissage structuré est généralement réalisé par un ensemble de plaques orientées de manière à favoriser les échanges entre le liquide et le gaz. Un exemple de garnissage structuré est décrit notamment dans le brevet FR 2913353 (US 2010/0213625). Selon l'exemple illustré en figure 3, le garnissage structuré est constitué d'au moins deux tranches (T1 et T2) de garnissage structuré. Classiquement, les tranches (T1 et T2) disposées l'une au-dessus de l'autre, sont orientées perpendiculairement l'une à l'autre. Afin d'augmenter la surface exploitée de la tranche supérieure (T1), la distribution du liquide est orientée par les moyens de répartition de liquide. Pour atteindre cet objectif, les moyens de répartition du liquide peuvent être disposés sensiblement perpendiculairement à la direction dans un plan transversal des plaques de la tranche supérieure (T1) du garnissage structuré. En effet, les plaques constituant le garnissage structuré comporte, dans le plan transversal, une direction principale, les moyens de répartition du liquide (5) sont orthogonales à cette direction. De cette manière, on exploite toutes les plaques de garnissage dès la première tranche.

Selon un mode de réalisation de l'invention, les moyens de répartition sont réalisés sous la forme d'une conduite cylindrique équipée de moyens de raccordement à au moins une cheminée. Alternativement, la conduite peut être réalisée sous d'autres formes par exemple prismatique, parallélépipédique... La conduite peut être sensiblement parallèle au plateau. La conduite peut être équipée de moyens de passage du liquide, notamment sous forme d'orifices ou de tubes, de préférence biseautés, les moyens de passage du liquide permettent la distribution selon l'orientation préférentielle du liquide depuis la conduite vers le garnissage. Avantageusement, les moyens de passage de liquide distribuent le liquide sous la forme de jet liquide sans former de gouttelettes. La conduite est fixée sur au moins une cheminée par les moyens de raccordement, notamment par vissage, soudage, collage, insertion au sein de la cheminée... Le raccordement de la conduite peut être notamment réalisé par filetage interne ou externe.

La figure 6 illustre un exemple de plateau distributeur (2) disposé au-dessus d'un garnissage structuré (3). Sur cette figure 6, les moyens de passage du gaz au travers du plateau (2) ne sont pas représentés. Selon le mode de réalisation illustré, des cheminées (6) de passage du liquide sont en saillie des deux côtés du plateau (2). Sur la saillie des cheminées (6) du côté inférieur du plateau (2) sont fixées des conduites cylindriques (5). Les conduites cylindriques (5) sont parallèles au plateau (2) et perpendiculaires à l'orientation du garnissage structuré (3), c'est-à-dire à la direction des plaques de la couche supérieure dudit garnissage structuré (3) dans le plan transversal. Les plaques constituant le garnissage structuré comporte, dans le plan transversal, une direction principale, les conduites (5) sont orthogonales à cette direction. Les conduites cylindriques comportent plusieurs moyens de passage du liquide formant des jets de liquide sur le garnissage structuré (3). Les jets de liquide (L) sont représentés en noir sur la figure 6. Ainsi, le liquide est réparti de manière plus homogène sur le garnissage selon une orientation préférentielle et sous forme de jet, ce qui favorise les échanges de matière et/ou de chaleur entre le gaz et le liquide au niveau du garnissage.

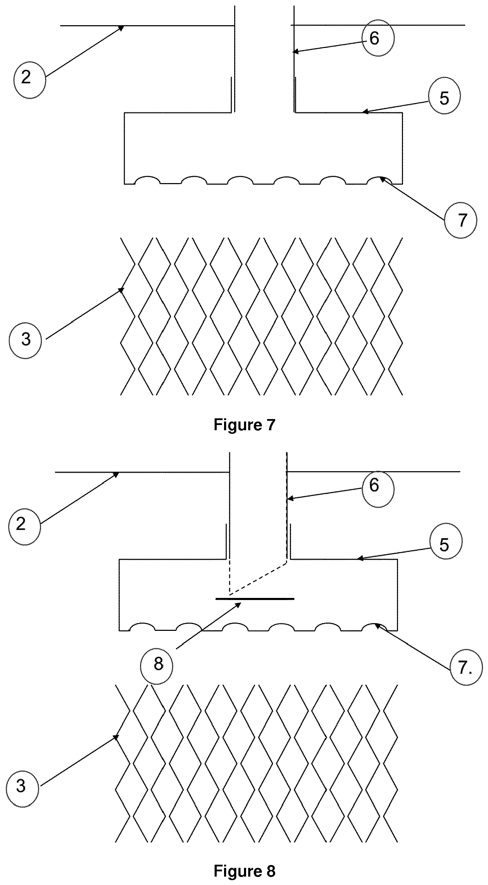

Les figures 7 à 12 présentent différents modes de réalisation des moyens de répartition réalisés sous la forme de conduite cylindrique. Pour ces figures, les éléments identiques sont désignés par les mêmes signes de référence. Pour la description de ces figures, seules les modifications apportées aux moyens de répartition de la figure 6 sont décrites.

La figure 7 présente un mode de réalisation des moyens de répartition. Selon ce mode de réalisation, la partie basse de la conduite de répartition (5) comporte plusieurs orifices (7) suffisamment petits pour maintenir une garde d'eau et distribuer ainsi uniformément le débit liquide. Les orifices (7) peuvent être alignés selon la direction axiale de la conduite cylindrique (5). Avantageusement, les orifices (7) sont sensiblement circulaires. La conduite (5) est fixée par des moyens de raccordement sur la face extérieure de saillie inférieure de la cheminée (6).

La figure 8 présente un premier mode de réalisation des moyens de répartition du liquide. Selon ce mode de réalisation pour lequel les moyens de passage du liquide (7) sont identiques à ceux de la figure 7, la conduite (5) comprend en outre une plaque ou un déflecteur (8) placé dans la conduite cylindrique (5) et disposé sous la cheminée de liquide (6) pour disperser l'inertie de écoulement de liquide tombant et pour éviter une hétérogénéité de la distribution. Tel qu'illustré sur cette figure, la saillie inférieure de la cheminée (6) est biseautée. La forme de la saillie de la cheminée n'est pas limitative et peut être combinée à tous les modes de réalisation décrits.

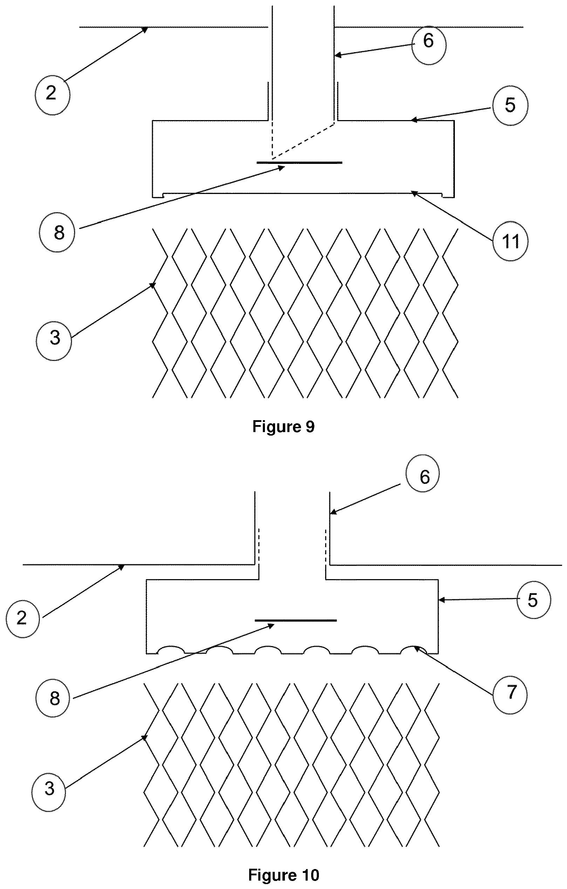

La figure 9 présente un deuxième mode réalisation des moyens de répartition du liquide. Selon ce mode de réalisation, les moyens de passage du liquide sont réalisés dans la partie basse de la conduite cylindrique (5) au moyen d'une fente (11). La fente (11) peut être de forme rectangulaire, oblongue ou analogue. Sur cette figure, un déflecteur (8) a été représenté, mais celui-ci est facultatif.

La figure 10 présente un troisième mode de réalisation des moyens de répartition du liquide. Selon ce mode de réalisation, la cheminée (6) ne comporte pas de saillie inférieure du coté inférieur du plateau (2) et la sortie primaire du liquide se fait par un orifice affleurant la plaque inférieure (2) du distributeur, le tube de la conduite cylindrique (5) est inséré dans cet orifice, par exemple par vissage. Telle que représentée, la conduite cylindrique (5) comporte plusieurs orifices (7) tels que décrits en référence au premier mode de réalisation. Ce mode de réalisation peut être combiné au troisième mode de réalisation ; les orifices (7) peuvent être remplacés par une fente (11). De plus, sur cette figure, un déflecteur (8) a été représenté, mais celui-ci est facultatif.

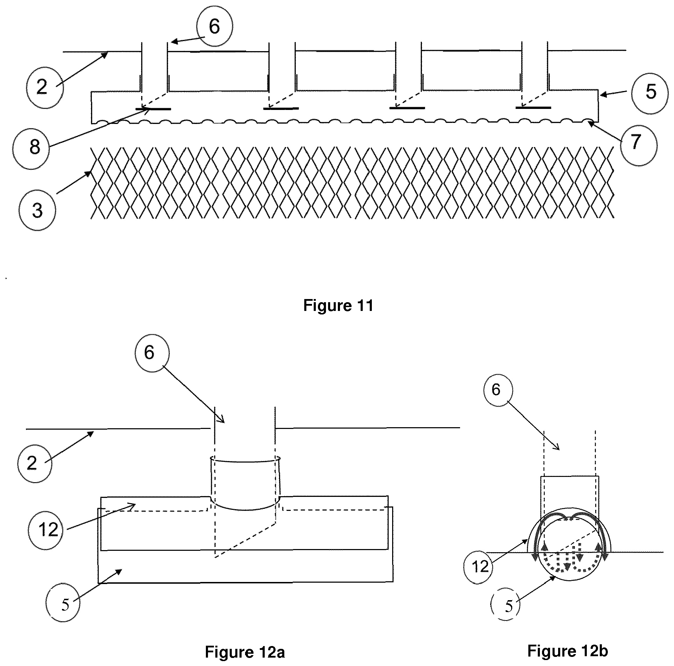

La figure 11 présente un quatrième mode de réalisation des moyens de répartition du liquide. Selon ce mode de réalisation, la conduite cylindrique (5) se rattache simultanément à plusieurs cheminées (6) en saillie sous le plateau (2), notamment jusqu'à traverser de bout en bout la colonne. Ce mode de réalisation a été représenté avec une série d'orifices (7) et une série de déflecteurs (8). Toutefois, la série d'orifices (7) peut être remplacée par une ou plusieurs fentes (11). De plus, les déflecteurs (8) sont facultatifs.

Les figures 12a (vue de face) et 12b (vue de profil) présentent un cinquième mode de réalisation des moyens de répartition du liquide. Selon ce mode de réalisation, la conduite cylindrique (5) est équipée d'une ouverture sur sa partie haute sous la forme d'une fente et d'un déflecteur (12) pour ramener le liquide vers le bas en évitant la production de fines gouttelettes. Les flèches sur la figure 12b illustrent l'écoulement du liquide dans la conduite cylindrique (5).

Alternativement, selon des variantes de réalisation non représentées, les orifices (7) des premier, deuxième et quatrième modes de réalisation peuvent être remplacés par des tubes verticaux. Afin d'optimiser l'orientation du jet de liquide sur le garnissage, les tubes peuvent être biseautés.

Les moyens de répartition du liquide (déflecteur) peuvent être réalisés pour des nouveaux plateaux distributeurs ou peuvent être installés également sur des distributeurs existants en cas de modification d'un plateau existant.

Ainsi, l'invention permet d'améliorer la distribution au moins sur une première tranche de garnissage structuré par des moyens de répartitions orientés. L'invention permet également d'augmenter le nombre de point d'injection avec un encombrement réduit. Ainsi, l'invention permet un gain potentiel de 3% à 5% en surface exploitée totale sur une hauteur de garnissage séparant deux distributeurs. Le gain peut même être supérieur car la distribution sur la seconde tranche de garnissage est également améliorée.

L'invention concerne également une colonne (1) d'échange de matière et/ou de chaleur entre deux fluides, dans laquelle deux fluides sont mis en contact au moyen d'au moins un contacteur gaz/liquide (3), la colonne (1) comprenant au moins une première entrée d'un fluide liquide, au moins une deuxième entrée d'un fluide gazeux, au moins une première sortie d'un fluide gazeux et au moins une deuxième sortie d'un fluide liquide. La colonne (1) comporte en outre au moins un plateau distributeur (2) tel que décrit ci-dessus, pour permettre la distribution des fluides sur le contacteur (3).

Dans le cas particulier ou le distributeur est installé en tête de colonne, ce dernier peut être équipé d'un répartiteur installé au dessus du distributeur, pour casser le jet du liquide arrivant de l'alimentation principale de la colonne. Le répartiteur permet également de bien répartir le liquide sur le distributeur.

De manière avantageuse, le contacteur gaz/liquide (3) est un lit de garnissage structuré. Dans ce cas, les moyens de répartition sont orientés perpendiculairement à l'orientation de la couche supérieure du garnissage structuré afin de distribuer le liquide selon une direction préférentielle favorisant les échanges de matière et/ou de chaleur dans le garnissage.

De préférence, le gaz et le liquide s'écoule dans la colonne (1) à contre-courant.

La colonne selon l'invention peut être utilisée dans des procédés de traitement de gaz, de captage de (par exemple par lavage aux amines), de distillation ou de transformation de l'air... De plus, l'invention peut être utilisée avec tout type de solvant.

## Revendications

1. Plateau distributeur pour colonne d'échange de chaleur et/ou de matière entre un gaz et un liquide comportant des moyens pour le passage dudit gaz (4) à travers ledit plateau (2) et au moins une cheminée (6) pour le passage dudit liquide à travers ledit plateau (2), **caractérisé en ce que** ledit plateau (2) comporte en outre des moyens de répartition du liquide (5) en saillie sur la partie inférieure dudit plateau pour répartir selon une orientation préférentielle ledit liquide en provenance de ladite cheminée (6), et **en ce que** ledit plateau est disposé au-dessus d'un garnissage structuré (3), lesdits moyens de répartition du liquide (5) sont orientés sensiblement perpendiculairement à la direction, dans un plan transversal, des plaques de la couche supérieure dudit garnissage structuré (3), lesdits moyens de répartition du liquide comprenant une conduite (5) équipée d'au moins un moyen de passage du liquide (7, 11), ladite conduite étant sensiblement parallèle audit plateau (2), et dans lequel ladite conduite (5) comporte une plaque de dispersion (8) du jet en provenance de ladite cheminée (6) vers ledit moyen de passage du liquide (7, 11).

2. Plateau selon la revendication 1, dans lequel lesdits moyens de répartition (5) du liquide répartissent ledit liquide sous forme d'au moins un jet.

3. Plateau selon l'une des revendications 1 ou 2, dans lequel lesdits moyens de répartition du liquide (5) sont fixés à ladite cheminée (6) par vissage, soudage, collage ou par insertion dans ladite cheminée (6).

4. Plateau selon l'une des revendications précédentes, dans lequel lesdits moyens de passage du gaz sont formés par des caissons (4) en saillie sur la partie supérieure dudit plateau (2).

5. Plateau selon l'une des revendications précédentes, dans lequel ledit moyen de passage du liquide est un orifice (7, 11) ou un tube placé sur ladite conduite (5).

6. Plateau selon la revendication 5, dans lequel ladite conduite (5) comporte une pluralité d'orifices (7) ou de tubes alignés selon la direction axiale de ladite conduite (5).

7. Plateau selon la revendication 5, dans lequel ledit orifice a la forme d'une fente (11).

8. Plateau selon l'une des revendications 1 à 4, dans lequel ledit moyen de passage du liquide est situé en partie haute desdits moyens de répartition du liquide, lesdits moyens de répartitions du liquide (5) étant pourvus d'un déflecteur (12) pour diriger le liquide en sortie desdits moyens de passage du liquide vers le bas.

9. Plateau selon l'une des revendications précédentes, dans lequel lesdits moyens de répartition du liquide (5) sont rattachés à plusieurs cheminées (6).

10. Colonne d'échange de chaleur et/ou de matière entre un gaz et un liquide, dans laquelle les deux fluides sont mis en contact au moyen d'un garnissage structuré (3), **caractérisé en ce que** ladite colonne comporte au moins un plateau distributeur (2) selon l'une des revendications précédentes pour distribuer lesdits fluides sur ledit garnissage structuré (3).

11. Colonne selon la revendication 10, dans lequel lesdits moyens de répartition du liquide (5) sont orientés sensiblement perpendiculairement à la direction, dans un plan transversal, des plaques de la couche supérieure dudit garnissage structuré (3).

12. Utilisation d'une colonne selon l'une des revendications 10 ou 11 pour un procédé de traitement de gaz, de captage de CO₂, de distillation ou de transformation d'air.

## Patentansprüche

1. Verteilerboden für eine Wärme- und/oder Materialaustauschsäule zwischen einem Gas und einer Flüssigkeit, umfassend Mittel (4) zum Führen des Gases quer über den Boden (2) und mindestens einen Abzug (6) zum Führen der Flüssigkeit quer über den Boden (2), **dadurch gekennzeichnet, dass** der Boden (2) außerdem Mittel (5) zum Verteilen der Flüssigkeit umfasst, die über den unteren Teil des Bodens vorstehen, um gemäß einer bevorzugten Orientierung die Flüssigkeit aus dem Abzug (6) zu verteilen, und dadurch, dass der Boden über einer strukturierten Füllung (3) angeordnet ist, wobei die Mittel (5) zum Verteilen der Flüssigkeit im Wesentlichen rechtwinklig zu der Richtung, in einer Querebene, der Lagen der oberen Schicht der strukturierten Füllung (3) orientiert sind, wobei die Mittel zum Verteilen der Flüssigkeit eine Leitung (5) umfassen, die mit mindestens einem Mittel (7, 11) zum Führen der Flüssigkeit ausgestattet sind, wobei die Leitung im Wesentlichen parallel zum Boden (2) ist, und wobei die Leitung (5) eine Dispersionsplatte (8) des Strahls aus dem Abzug (6) zum Mittel (7, 11) zum Führen der Flüssigkeit umfasst.

2. Boden nach Anspruch 1, wobei die Mittel (5) zum Verteilen der Flüssigkeit die Flüssigkeit in der Form mindestens eines Strahls verteilen.

3. Boden nach einem der Ansprüche 1 oder 2, wobei die Mittel (5) zum Verteilen der Flüssigkeit am Abzug (6) durch Schrauben, Schweißen, Kleben oder durch Einführen in den Abzug (6) fixiert sind.

4. Boden nach einem der vorhergehenden Ansprüche, wobei die Mittel zum Führen des Gases durch Gehäuse (4) gebildet sind, die auf dem oberen Teil des Bodens (2) vorstehen.

5. Boden nach einem der vorhergehenden Ansprüche, wobei das Mittel zum Führen der Flüssigkeit eine Öffnung (7, 11) oder ein Rohr ist, das auf der Leitung (5) platziert ist.

6. Boden nach Anspruch 5, wobei die Leitung (5) eine Vielzahl von Öffnungen (7) oder Rohren umfasst, die in der axialen Richtung der Leitung (5) ausgerichtet sind.

7. Boden nach Anspruch 5, wobei die Öffnung die Form eines Schlitzes (11) hat.

8. Boden nach einem der Ansprüche 1 bis 4, wobei das Mittel zum Führen der Flüssigkeit teilweise über den Mitteln zum Verteilen der Flüssigkeit angeordnet ist, wobei die Mittel (5) zum Verteilen der Flüssigkeit mit einem Abweiser (12) versehen sind, um die Flüssigkeit, die aus den Mitteln zum Führen der Flüssigkeit austritt, nach unten zu leiten.

9. Boden nach einem der vorhergehenden Ansprüche, wobei die Mittel (5) zum Verteilen der Flüssigkeit an mehreren Abzügen (6) angebracht sind.

10. Wärme- und/oder Materialaustauschsäule zwischen einem Gas und einer Flüssigkeit, wobei die beiden Fluids mittels einer strukturieren Füllung (3) in Kontakt gebracht werden, **dadurch gekennzeichnet, dass** die Säule mindestens einen Verteilerboden (2) nach einem der vorhergehenden Ansprüche umfasst, um die Fluids auf der strukturierten Füllung (3) zu verteilen.

11. Säule nach Anspruch 10, wobei die Mittel (5) zum Verteilen der Flüssigkeit im Wesentlichen rechtwinklig zu der Richtung, in einer Querebene, der Lagen der oberen Schicht der strukturierten Füllung (3) orientiert sind.

12. Verwendung einer Säule nach einem der Ansprüche 10 oder 11 für ein Verfahren zur Behandlung von Gas, zum Auffangen von CO₂, zur Destillation oder zur Transformation von Luft.

## Claims

1. A distributor tray for a column intended for heat and/or material exchange between a gas and a liquid, comprising means (4) allowing passage for said gas through said tray (2) and at least one chimney (6) allowing passage of said liquid through said tray (2), **characterized in that** said tray (2) furthermore comprises liquid distribution means (5) projecting beyond the lower part of said tray for distributing said liquid coming from said chimney (6) with a preferred orientation, and **in that** said tray (2) is arranged above a structured packing (3), said liquid distribution means (5) are oriented substantially perpendicular to the direction, in a transverse plane, of the plates of the upper layer of said structured packing (3), said liquid distribution means comprise a pipe (5) equipped with at least one liquid passage means (7, 11), said pipe (5) being substantially parallel to said tray (2), and said pipe (5) comprising a dispersion plate (8) for dispersing the jet coming from said chimney (6) towards said liquid passage means (7, 11).

2. A tray as claimed in claim 1, wherein said liquid distribution means (5) distribute said liquid in form of at least one jet.

3. A tray as claimed in claim 1 or 2, wherein said liquid distribution means (5) are fastened to said chimney (6) by screwing, welding, gluing or insertion in said chimney (6).

4. A tray as claimed in any one of the previous claims, wherein said gas passage means consist of casings (4) projecting beyond the upper part of said tray (2).

5. A tray as claimed in any one of the previous claims, wherein said liquid passage means is an orifice (7, 11) or a tube arranged on said pipe (5).

6. A tray as claimed in claim 5, wherein said pipe (5) comprises a plurality of orifices (7) or tubes aligned along the axial direction of said pipe (5).

7. A tray as claimed in claim 5, wherein said orifice has the shape of a slot (11).

8. A tray as claimed in any one of claim 1 to 4, wherein said liquid passage means is located in the upper part of said liquid distribution means, said liquid distribution means (5) being provided with a deflector (12) for sending the liquid at the outlet of said liquid passage means downwards.

9. A tray as claimed in any one of the previous claims, wherein said liquid distribution means (5) are shared by several chimneys (6).

10. A column intended for heat and/or material exchange between a gas and a liquid, wherein the two fluids are contacted by means of a structured packing (3), **characterized in that** said column comprises at least one distributor tray (2) as claimed in any one of the previous claims for distributing said fluids onto said structured packing (3).

11. A column as claimed in claim 10, wherein said liquid distribution means (5) are oriented substantially perpendicular to the direction, in a transverse plane, of the plates of the upper layer of said structured packing (3).

12. Use of a column as claimed in any one of claims 10 or 11 for a gas treatment, capture, distillation or air conversion method.
